# EUROPÄISCHE PATENTSCHRIFT

(11) **EP 3 098 457 B1**
(45) Veröffentlichungstag und Bekanntmachung des Hinweises auf die Patenterteilung: **26.10.2022**
(21) Anmeldenummer: 16171374.8
(22) Anmeldetag: 25.05.2016
(51) Int. Cl.: F15B 15/18, F15B 1/26

(54) **HYDROSTATISCHER LINEARER AKTUATOR UND ANORDNUNG MIT HYDROSTATISCHEN LINEAREN AKTUATOREN**
HYDROSTATIC LINEAR ACTUATOR AND ASSEMBLY WITH HYDROSTATIC LINEAR ACTUATORS
ACTIONNEUR LINÉAIRE HYDROSTATIQUE ET DISPOSITIF AVEC ACTIONNEURS LINÉAIRES HYDROSTATIQUES

(30) Priorität: 27.05.2015 DE 102015209644
(43) Veröffentlichungstag der Anmeldung: 30.11.2016
(73) Patentinhaber: Robert Bosch GmbH, 70442 Stuttgart (DE)
(72) Erfinder: Caspers, Leo, 5658 EN Eindhoven (NL); Rolink, Chris, 6104AH Koningsbosch (NL); Donkers, Chris, 5087 KM Diessen (Noord-Brabant) (NL); Boeijen, Sander, 5351 AL Berghem (NL)

(56) Entgegenhaltungen:
- EP-A2- 1 837 530
- DE-A1-102012 013 767
- DE-A1-102013 006 137
- JP-A- 2009 204 052
- US-A1- 2006 168 956
- US-A1- 2007 119 160

## Beschreibung

Die Erfindung betrifft eine Anordnung mit hydrostatischen linearen Aktuatoren gemäß dem Oberbegriff des Patentanspruchs 1.

Aus dem Stand der Technik sind hydrostatische lineare Aktuatoren mit Zylindern bekannt, deren Kolbenstangen ein- und ausgefahren werden können. Wenn eine mobile Arbeitsmaschine wie z.B. ein Bagger mehrere derartige Aktuatoren bzw. Zylinder benötigt, werden diese von einer gemeinsamen Pumpe und über eine jeweilige Zumessblenden versorgt. Die gemeinsame Pumpe wird von einem zentralen Motor z.B. einem Dieselmotor der mobilen Arbeitsmaschine angetrieben. Bei diesem Konzept werden hydraulische Leitungen in erheblicher Länge benötigt, um die Abstände der einzelnen Zylinder zu der zentralen Pumpe zu überbrücken.

Die US 2010/0199565 A1 zeigt einen hydrostatischen linearen Aktuator mit einem Differenzialzylinder, dem genau eine hydrostatische Pumpe mit entsprechendem Elektromotor und genau ein Tank zugeordnet sind. Damit ist eine funktional kompakte Einheit eines elektrohydraulischen Aktuators mit verkürzten Leitungen geschaffen. Nachteilig ist der räumliche Platzbedarf des einzelnen Aktuators, da die Pumpe, der Motor und der Tank auf einem gemeinsamen plattenförmigen Bauteil montiert und räumlich von dem Differenzialzylinder getrennt sind.

In der Druckschrift WO 2009/064264 A1 ist ein hydrostatischer linearer Aktuator zur Pitchverstellung der Rotorblätter von Windturbinen gezeigt, wobei dem Differenzialzylinder genau eine hydrostatische Pumpe mit entsprechendem Elektromotor und genau ein Speicher bzw. Tank zugeordnet sind. Weiterhin sind die genannten Komponenten aneinander befestigt, so dass sich ein funktional und darüber hinaus auch räumlich kompakter Aktuator mit minimaler Leitungslänge ergibt.

Nachteilig an letztgenannten Aktuatoren ist ihre gesamte Länge, da der Differenzialzylinder und der Tank entlang der Arbeitsrichtung des Differenzialzylinders hintereinander angeordnet sind. Da sich der Speicher zwischen der Bodenseite des Differenzialzylinders und einer als Auge ausgebildeten Koppelstelle des Aktuators befindet, und da der Speicher kein tragendes Bauteil ist, muss eine tragende Konstruktion um den Speicher herum vorgesehen werden, die die Bodenseite des Differenzialzylinders mit der Koppelstelle des Aktuators verbindet.

Die Druckschrift US 2007/0119160 A1 zeigt einen kompakten Aktuator, dessen Länge im Wesentlichen von einem Differenzialzylinder bestimmt wird. Ein Tank ist umgreifend am Außenumfang des Differenzialzylinders angeordnet. Am Außenumfang seitlich neben dem Differenzialzylinder sind ein Motor und eine Pumpe angeordnet.

Die Druckschrift US 2007/0119160 A1 zeigt auch hydraulische Anordnungen aus mehreren kompakten Aktuatoren. Diese können zentral über Multiplexing gesteuert werden.

Dem gegenüber liegt der Erfindung die Aufgabe zu Grunde, eine Anordnung mit kompakten Aktuatoren zu schaffen, deren Länge und deren vorrichtungstechnischer Aufwand weiter verringert sind.

Diese Aufgabe wird gelöst durch eine Anordnung mit Aktuatoren mit den Merkmalen des Patentanspruchs 1.

Der beanspruchte hydrostatische lineare Aktuator hat genau einen Differenzialzylinder, der von genau einer Pumpe versorgbar ist, die über einen Elektromotor antreibbar ist, wobei die Pumpe und der Elektromotor am Außenumfang des Differenzialzylinders angeordnet sind. Der Aktuator weist zum Ausgleich von Differenzdruckmittel einen kreiszylindrischen Niederdruckspeicher auf. Erfindungsgemäß ist auch der Niederdruckspeicher am Außenumfang des Differenzialzylinders angeordnet. Damit entspricht die Gesamtlänge des Aktuators etwa derjenigen des Differenzialzylinders wodurch die Gesamtlänge des Aktuators minimiert ist.

Der erfindungsgemäße Aktuator hat eine hydraulische Steuereinheit, die ebenfalls am Außenumfang des Differenzialzylinders angeordnet ist, um die Länge des Aktuators gering zu halten. Die hydraulische Steuereinheit ist als ein Steuerblock weitergebildet, der an dem Niederdruckspeicher befestigt ist, und der vorrichtungstechnisch einfach und kompakt eine Stirnwand des Niederdruckspeichers bildet.

Dazu kann der Steuerblock an einem stirnseitigen Flansch des kreiszylindrischen Niederdruckspeichers befestigt sein. Damit kann die Kolbenstange auch längere Zeit unter Last gehalten werden.

Da eine Drehzahl des Elektromotors verstellbar oder regelbar ist, ist eine Anpassung des Aktuators an verschiedene benötigte hydraulische Leistungen möglich, und die Kolbenstange kann mit verstellbarer oder regelbarer Geschwindigkeit ein- und ausgefahren werden.

Die Pumpe kann dabei stets mit optimalem Wirkungsgrad betrieben werden. Dies gilt insbesondere, wenn die Pumpe in ihrem Fördervolumen verstellbar ist.

Die beanspruchte Anordnung hat mehrere vorbeschriebene Aktuatoren und dazu eine zentrale elektronische Steuereinheit. Mit der elektronischen Steuereinheit können erfindungsgemäß die mehreren hydraulischen Steuereinheiten und Drehzahlen der Elektromotoren gesteuert und/oder geregelt werden.

Vorzugsweise hat der Differenzialzylinder eine Kolbenstange mit geringem Volumen, also mit kleinem Durchmesser und/oder geringer Länge im Verhältnis zum Zylinderrohr. Damit ist ein Differenzvolumen des Differenzialzylinders zwischen Ausfahren und Einfahren gering, und die nötige Größe des Tanks bzw. des Niederdruckspeichers ist minimiert. Damit ist der Bauraum des Aktuators minimiert.

Vorzugsweise ist der Niederdruckspeicher am Differenzialzylinder befestigt, und der Differenzialzylinder bildet einen Rahmen des Aktuators. Damit kann der gesamte Aktuator bei seiner Fertigung fertig zusammengebaut und getestet werden. Wenn der Differenzialzylinder später an seinem Einsatzort montiert wird, sind die anderen Komponenten des Aktuators somit ebenfalls montiert.

Mit einem geschlossenen hydraulischen Kreis des erfindungsgemäßen Aktuators kann ein direkter Antrieb realisiert werden, und die elektrische Leistung des übergangsweise als Generator genutzten Elektromotors zurück gewonnen werden.

Bevorzugt wird ein vergleichsweise großer Differenzialzylinder, also z.B. ein Zylinderrohr mit mindestens etwa 300 cm Länge.

Weitere vorteilhafte Ausgestaltungen der Erfindung sind in den abhängigen Patentansprüchen beschrieben.

Bei einer besonders kompakten Weiterbildung weist der Niederdruckspeicher eine Luft- oder Stickstoffkammer auf.

Bei einer besonders kompakten Weiterbildung ist die Pumpe im Niederdruckspeicher angeordnet. Wenn die Pumpe dabei in einem unteren Bereich des Tanks bzw. des Niederdruckspeichers eingesetzt wird, ist sie in Druckmittel getaucht.

Bei einer besonders kompakten Weiterbildung ist der Elektromotor am Niederdruckspeicher benachbart zur Pumpe befestigt.

Dabei können eine den Elektromotor und die Pumpe verbindende Welle und der Niederdruckspeicher eine gemeinsame Längsachse haben Bei einer Weiterbildung sind der Elektromotor und die Pumpe gemeinsam im Bereich der Stirnwand des kreiszylindrischen Niederdruckspeichers angeordnet. Dabei durchdringt die den Elektromotor und die Pumpe verbindende Welle den Steuerblock.

Wenn der erfindungsgemäße Aktuator einen (z.B. für 250 bar ausgelegten) Hochdruckspeicher aufweist, ist dieser vorzugsweise ebenfalls am Außenumfang des Differenzialzylinders angeordnet, um die Länge des Aktuators gering zu halten. Der Hochdruckspeicher kann am Tank bzw. Niederdruckspeicher befestigt sein.

Wenn die Pumpen Verstellpumpen sind, kann über die Steuereinheit auch das Fördervolumen der Verstellpumpen verstellt werden. Damit lassen sich maximaler Wirkungsgrad und maximale Flexibilität in Geschwindigkeit und Druck der Aktuatoren realisieren.

Bei der erfindungsgemäßen Anordnung können die Größen der Differenzialzylinder und insbesondere der Pumpen an den jeweiligen Einsatz der einzelnen Aktuatoren angepasst werden. Der Druck wird nicht von der zentralen Pumpe bestimmt, sondern kann innerhalb jedes Aktuators nur so hoch wie nötig sein. Die Leitungslängen der Anordnung sind minimiert, und die Verluste sind verringert.

Ein besonders bevorzugter Anwendungsfall der erfindungsgemäßen Anordnung stellen mobile Arbeitsmaschinen dar. Wenn die Anordnung z.B. für einen Bagger vorgesehen ist, wird ein erster Aktuator an einen Löffel gekoppelt, und/oder ein zweiter Aktuator an einen Stiel gekoppelt, und/oder ein dritter Aktuator an einen Arm gekoppelt.

Ein Ausführungsbeispiel eines Aktuators der erfindungsgemäßen Anordnung wird in den Figuren dargestellt und näher erläutert:
Es zeigen
Figur 1 in einer perspektivischen Darstellung den Aktuator gemäß dem Ausführungsbeispiel,
Figur 2 in einem Längsschnitt den Aktuator aus Figur 1,
Figur 3 in einer Ansicht den Aktuator aus Figur 1 und
Figur 4 in einer weiteren Ansicht den Aktuator aus Figur 1.

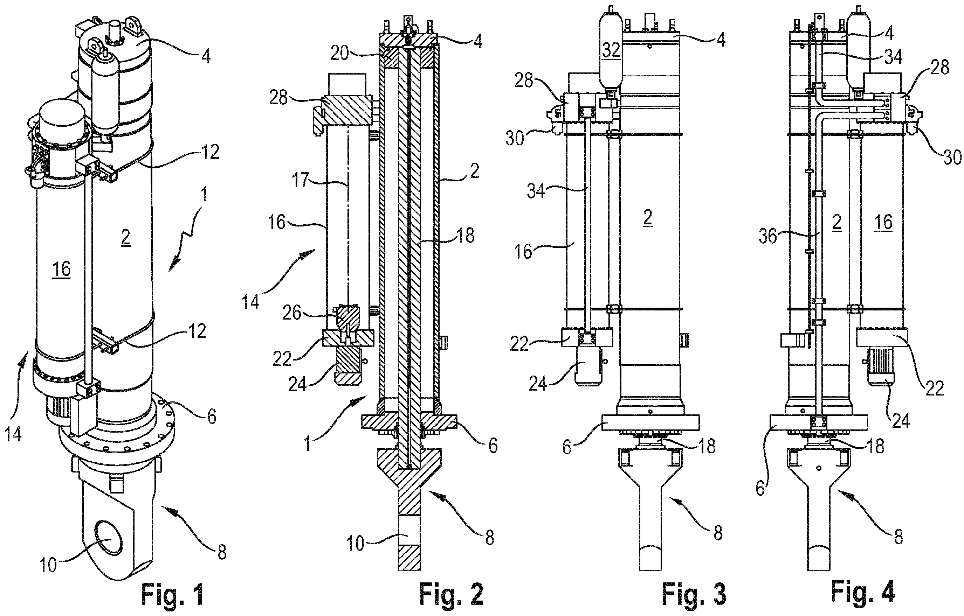

Figur 1 zeigt das Ausführungsbeispiel eines Aktuators der erfindungsgemäßen Anordnung. Er hat einen Differentialzylinder 1, von dem in Figur 1 ein kreiszylindrisches Zylinderrohr 2 mit einer bodenseitigen Abschlussplatte 4 und eine stangenseitige Abschlussplatte 6 dargestellt sind. Die stangenseitige Abschlussplatte 6 wird von einer (in Figur 1 nicht dargestellten) Kolbenstange durchdrungen, an deren freien Endabschnitt ein Koppelelement 8 mit einem Auge 10 befestigt ist.

Über zwei zueinander beabstandete gebogene Befestigungsmittel 12 ist parallel zum Zylinderrohr 2 ein Niederdruckspeicher 14 befestigt, wobei die beiden Befestigungsmittel 12 jeweils das Zylinderrohr 2 des Differentialzylinders 1 und ein kreiszylindrisches Rohr 16 des Niederdruckspeichers 14 umfassen.

Figur 2 zeigt den Aktuator in einer geschnittenen Darstellung. Im Innern des Zylinderrohres 2 ist die Kolbenstange 18 dargestellt, die einen Kolben 20 des Differentialzylinders 1 mit dem Koppelelement 8 starr verbindet. Der Kolben 20 trennt einen Bodenraum, der bei der in Figur 2 gezeigten Stellung des Kolbens 20 minimiert ist, und einen Ringraum, der bei der in Figur 2 gezeigten Stellung des Kolbens 20 maximiert ist.

Eine Mittelachse 17 des Rohres 16 des Niederdruckspeichers 14 ist parallel zum Zylinderrohr 2 des Differentialzylinders 1 angeordnet. Das Rohr 16 des Niederdruckspeichers 14 ist mit einer Abschlussplatte 22 stirnseitig verschlossen, wobei an der Abschlussplatte 22 ein Elektromotor 24 und eine z. B. als Axialkolbenpumpe ausgebildete Pumpe 26 befestigt sind. Dabei ist der Elektromotor 24 außerhalb des Rohres 16 angeordnet, während die Pumpe 26 innerhalb des Rohres 16 und damit im Niederdruckspeicher 14 angeordnet ist. Die gemeinsame Drehachse des Elektromotors 24 und der Pumpe 26 liegt auf der Mittelachse 17 des Niederdruckspeichers 14.

An dem der Abschlussplatte 22 gegenüber liegenden Endabschnitt des Rohres 16 ist der Niederdruckspeicher 14 von einem hydraulischen Steuerblock 28 verschlossen. Dieser kann z. B. Pilot- und Patronenventile zur Steuerung der Bewegungsrichtung und / oder Stromregelventile zur Geschwindigkeitssteuerung des Kolbens 20 aufweisen. Weiterhin kann der Steuerblock 28 eine Druckmittelzustands-Funktion (z. B. einen Filter 30), einen Indikator für die Verschmutzung des Filters 30, Druckbegrenzungsventile und eine Einfüllöffnung aufweisen.

In Figur 3 ist zu erkennen, dass beim gezeigten Aktuator an dem Steuerblock 28 der Filter 30 und ein Hochdruckspeicher 32 für eine Haltefunktion angeordnet sind. Weiterhin ist ein (nicht gezeigter) Drucksensor zur Prüfung des Drucks der Haltefunktion vorgesehen.

Im Betrieb des Aktuators wird die (in Figur 3 nicht gezeigte) Pumpe 26 vom Elektromotor 24 drehzahlvariabel angetrieben, und es wird Druckmittel über eine Hochdruckleitung 34, die am Außenumfang des Rohres 16 des Niederdruckspeichers 14 parallel zu diesem verläuft, zum Steuerblock 28 gefördert.

In Figur 4 ist zu erkennen, dass das Druckmittel vom Steuerblock 28 über eine kolbenbodenseitige Arbeitsleitung 34 und eine ringraumseitige Arbeitsleitung 36 zu einem der beiden Arbeitsräume des Differentialzylinders 1 geführt wird, während das Druckmittel aus dem anderen Arbeitsraum über die entsprechende Arbeitsleitung 34, 36 in den Niederdruckspeicher 14 zurückgefördert wird.

Ein Ausführungsbeispiel der erfindungsgemäßen Anordnung hat mehrere derartige Aktuatoren, wobei die Anordnung eine (nicht gezeigte) elektronische Steuereinheit aufweist, über die die Stromversorgung der mehreren Elektromotoren 24 und die Ventile der mehreren Steuerblöcke 28 gesteuert werden.

Offenbart sind ein funktional und konstruktiv kompakter hydrostatischer Aktuator und eine Anordnung mit mehreren derartigen Aktuatoren. Der Aktuator hat einen Differenzialzylinder, der die Gesamtlänge des Aktuators bestimmt, da eine Pumpe, ein Elektromotor und ein Niederdruckspeicher am Außenumfang des Zylinderrohres des Differenzialzylinders angeordnet und an diesem direkt oder indirekt befestigt sind.

### Bezugszeichenliste

- 1: Differenzialzylinder
- 2: Zylinderrohr
- 4: Abschlussplatte
- 6: Abschlussplatte
- 8: Koppelelement
- 10: Auge
- 12: Befestigungsmittel
- 14: Niederdruckspeicher
- 16: Rohr
- 17: Mittelachse
- 18: Kolbenstange
- 20: Kolben
- 22: Abschlussplatte
- 24: Elektromotor
- 26: Pumpe
- 28: Steuerblock
- 30: Filter
- 32: Hochdruckspeicher
- 34: Arbeitsleitung
- 36: Arbeitsleitung

## Patentansprüche

1. Anordnung mit einer zentralen Steuereinheit und mit mehreren hydrostatischen linearen Aktuatoren, wobei jeder Aktuator einen Differenzialzylinder (1) aufweist, der von genau einer Pumpe (26) versorgbar ist, die über genau einen Elektromotor (24) mit verstellbarer oder regelbarer Drehzahl antreibbar ist, wobei die Pumpe (26) und der Elektromotor (24) am Außenumfang des Differenzialzylinders (1) angeordnet sind, und wobei der Aktuator einen kreiszylindrischen Niederdruckspeicher (14) aufweist, der am Außenumfang des Differenzialzylinders (1) angeordnet ist, und wobei jeder Aktuator eine hydraulische Steuereinheit (28) aufweist, **dadurch gekennzeichnet, dass** die hydraulische Steuereinheit (28) als ein Steuerblock weitergebildet ist, der am Außenumfang des Differenzialzylinders (1) und an dem Niederdruckspeicher (14) befestigt ist, und der eine Stirnwand des Niederdruckspeichers (14) bildet, wobei über die zentrale Steuereinheit die mehreren hydraulischen Steuereinheiten (28) und Drehzahlen der Elektromotoren (24) steuerbar und/oder regelbar sind.

2. Anordnung nach Anspruch 1, wobei der Niederdruckspeicher (14) eine Luft- oder Stickstoffkammer aufweist.

3. Anordnung nach Anspruch 1 oder 2, wobei die Pumpe (26) im Niederdruckspeicher (14) angeordnet ist.

4. Anordnung nach einem der vorhergehenden Ansprüche, wobei der Elektromotor (24) am Niederdruckspeicher (14) befestigt ist.

5. Anordnung nach Anspruch 4, wobei der Elektromotor (24) und die Pumpe (26) und der Niederdruckspeicher (14) eine gemeinsame Längsachse haben.

6. Anordnung nach Anspruch 4, wobei der Elektromotor (24) und die Pumpe (26) gemeinsam im Bereich einer stirnseitigen Begrenzung des kreiszylindrischen Niederdruckspeichers (14) angeordnet sind, und wobei eine den Elektromotor (24) und die Pumpe (26) verbindende Welle den Steuerblock durchdringt.

7. Anordnung nach einem der vorhergehenden Ansprüche mit einem Hochdruckspeicher (32), der am Außenumfang des Differenzialzylinders (1) angeordnet ist.

## Claims

1. Arrangement having a central control unit and having multiple hydrostatic linear actuators, wherein each actuator has a differential cylinder (1) which can be provided with a supply by exactly one pump (26) which can be driven with adjustable or regulable rotational speed via exactly one electric motor (24), wherein the pump (26) and the electric motor (24) are arranged on the outer circumference of the differential cylinder (1), and wherein the actuator has a circular-cylindrical low-pressure accumulator (14) which is arranged on the outer circumference of the differential cylinder (1), and wherein each actuator has a hydraulic control unit (28), **characterized in that** the hydraulic control unit (28) is refined as a control block which is fastened to the outer circumference of the differential cylinder (1) and to the low-pressure accumulator (14) and which forms an end wall of the low-pressure accumulator (14), wherein the multiple hydrostatic control units (28) and rotational speeds of the electric motors (24) can be controlled and/or regulated via the central control unit.

2. Arrangement according to Claim 1, wherein the low-pressure accumulator (14) has an air or nitrogen chamber.

3. Arrangement according to Claim 1 or 2, wherein the pump (26) is arranged in the low-pressure accumulator (14).

4. Arrangement according to one of the preceding claims, wherein the electric motor (24) is fastened to the low-pressure accumulator (14).

5. Arrangement according to Claim 4, wherein the electric motor (24) and the pump (26) and the low-pressure accumulator (14) have a common longitudinal axis.

6. Arrangement according to Claim 4, wherein the electric motor (24) and the pump (26) are arranged together in the region of an end-side delimitation of the circular-cylindrical low-pressure accumulator (14), and wherein a shaft which connects the electric motor (24) and the pump (26) extends through the control block.

7. Arrangement according to one of the preceding claims having a high-pressure accumulator (32) which is arranged on the outer circumference of the differential cylinder (1).

## Revendications

1. Agencement comprenant une unité de commande centrale et plusieurs actionneurs linéaires hydrostatiques, chaque actionneur présentant un vérin différentiel (1) qui peut être alimenté par exactement une pompe (26) qui peut être entraînée par exactement un moteur électrique (24) avec une vitesse de rotation variable ou réglable, la pompe (26) et le moteur électrique (24) étant disposés sur la circonférence extérieure du vérin différentiel (1), et l'actionneur présentant un accumulateur basse pression (14) cylindrique circulaire qui est disposé sur la circonférence extérieure du vérin différentiel (1), et chaque actionneur présentant une unité de commande hydraulique (28),
**caractérisé en ce que** l'unité de commande hydraulique (28) est perfectionnée sous la forme d'un bloc de commande qui est fixé à la circonférence extérieure du vérin différentiel (1) et à l'accumulateur basse pression (14) et qui constitue une paroi frontale de l'accumulateur basse pression (14), dans lequel l'unité de commande centrale permet de commander et/ou de réguler les plusieurs unités de commande hydrauliques (28) et les vitesses de rotation des moteurs électriques (24).

2. Agencement selon la revendication 1, dans lequel l'accumulateur basse pression (14) présente une chambre d'air ou d'azote.

3. Agencement selon la revendication 1 ou 2, dans lequel la pompe (26) est disposée dans l'accumulateur basse pression (14).

4. Agencement selon l'une quelconque des revendications précédentes, dans lequel le moteur électrique (24) est fixé à l'accumulateur basse pression (14).

5. Agencement selon la revendication 4, dans lequel le moteur électrique (24) et la pompe (26) et l'accumulateur basse pression (14) présentent un axe longitudinal commun.

6. Agencement selon la revendication 4, dans lequel le moteur électrique (24) et la pompe (26) sont disposés ensemble dans la zone d'une limite frontale de l'accumulateur basse pression (14) cylindrique circulaire, et dans lequel un arbre reliant le moteur électrique (24) et la pompe (26) traverse le bloc de commande.

7. Agencement selon l'une quelconque des revendications précédentes, comprenant un accumulateur haute pression (32) qui est disposé sur la circonférence extérieure du vérin différentiel (1).
